# EUROPEAN PATENT APPLICATION

(11) **EP 4 596 560 A1**
(43) Date of publication of application: **06.08.2025**
(21) Application number: 23872324.1
(22) Date of filing: 26.09.2023
(51) Int. Cl.: C07F 9/12, C08G 59/62, C09K 21/12

(54) **PHOSPHORUS-CONTAINING POLYCYCLIC AROMATIC HYDROXY COMPOUND, CURABLE RESIN COMPOSITION CONTAINING SAME, AND METHOD FOR PRODUCING SAID PHOSPHORUS-CONTAINING POLYCYCLIC AROMATIC HYDROXY COMPOUND**

(30) Priority: 30.09.2022 JP 2022158685
(71) Applicant: NIPPON STEEL CHEMICAL & MATERIAL CO., LTD., Tokyo 103-0027 (JP); Daihachi Chemical Industry Co., Ltd., Osaka-shi, Osaka 541-0053 (JP)
(72) Inventor: WASANO, Tsugutoshi, Tokyo 103-0027 (JP); FUJIMOTO, Kazuo, Higashiosaka-shi, Osaka 577-0056 (JP)
(74) Representative: Kraus & Lederer PartGmbB
(86) International application number: PCT/JP2023/034895
(87) International publication number: WO 2024/071101

(57) **Abstract**

Provided is a phosphorus-containing polycyclic aromatic hydroxy compound that yields a cured product having excellent flame retardancy, heat resistance, and dielectric properties, in which the compound has a low water absorption rate and dielectric properties that has a low change after water absorption. A phosphorus-containing polycyclic aromatic hydroxy compound characterized by being represented by general formula (1), 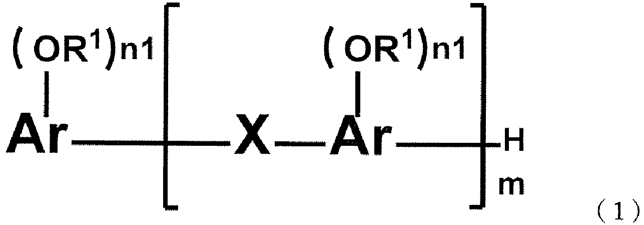 wherein, in general formula (1), m is an integer of 1 to 20; n1 is each independently an integer of 1 to 4; and Ar is each independently an aromatic ring having 6 to 30 carbon atoms (excluding a benzene ring) optionally having a substituent, R1 is each independently hydrogen, a linear or branched alkyl group having 1 to 5 carbon atoms, or a substituent represented by general formula (2), provided that at least one R1 comprises a structure of the general formula (2), X represents a linking group and is each independently oxygen, sulfur, a substituted or unsubstituted cycloalkylene having 3 to 20 carbon atoms; or a substituted or unsubstituted aralkylene having 8 to 32 carbon atoms.

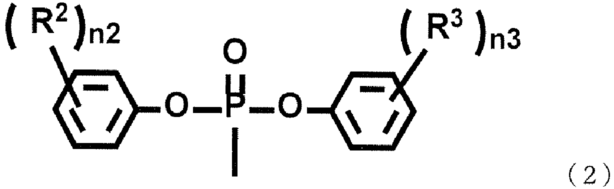

## Description

### Technical Field

The present invention relates to a reactive phosphorus compound, in particular a phosphorus-containing polycyclic aromatic hydroxy compound, which is useful as a flame retardant for a thermosetting resin such as an epoxy resin. The present invention also relates to a curable resin composition containing the phosphorus-containing polycyclic aromatic hydroxy compound and a curable resin, and a method for producing the phosphorus-containing polycyclic aromatic hydroxy compound.

### Background Art

Plastic materials have been used in a wide range of applications, from building materials to electrical and electronic devices, due to their excellent mechanical properties and molding processability. However, most plastic materials are flammable, and therefore flame retardation is required for safety against heat generation and ignition as well as fire in applications such as electrical and electronic products, office automation equipment, and communication equipment.

As flame retardation technology for plastic materials, additive flame retardants such as halogen-based flame retardants, inorganic-based flame retardants, and phosphorus-based flame retardants and the like are generally added regardless of the type of resin or application. However, it has been pointed out that among these, the halogen-based flame retardants that are mainly based on bromine may be a source of highly carcinogenic dioxins, and there is a move towards restricting their use in response to the recent trend to reduce environmentally hazardous substances. Also, the inorganic-based flame retardants such as magnesium hydroxide and aluminum hydroxide and the like have a flame retardation effect due to their endotherm, however, a large amount of addition is required to be added in large amounts in order to achieve sufficient flame retardation, resulting in a decrease of various properties of plastic molded products. For this reason, phosphorus-based flame retardants have been widely used, which do not generate harmful substances and enable flame retardation with relatively small amounts added. However, effects on their properties cannot be avoided, such as a decrease in processability due to bleed-out and the like, a reduction in glass transition temperature, and the like.

In order to solve these problems of these additive flame retardants, reactive flame retardants that contain phosphorus atoms as a flame retardant component and have a reactive group, have been developed and widely used. As reactive flame retardants capable of being applied to epoxy resin compositions that are widely used in the electronic and electrical fields, for example, Patent Literature 1 discloses, as a curing agent for epoxy resins, a phenolic resin obtained by reacting bisphenol A with formaldehyde to obtain hydroxymethylbisphenol A, followed by reaction with 9,10-dihydro-9-oxa-10-phosphaphenanthrene-10-oxide (hereinafter abbreviated as "DOPO"). Patent Literatures 2 and 3 disclose phosphorus-containing phenolic resins in which a hydroxyl group of a novolac resin was modified with diphenyl phosphorochloridates. Furthermore, Patent Literature 4 discloses a phosphorus-containing epoxy resin obtained by reacting DOPO with quinones followed by reacting the reacted product with an epoxy resin. These resins solve the problems of processability such as bleed-out of a flame retardant, and are not deteriorated in thermal properties such as heat resistance.

In recent years, however, in the field of electronic and electrical materials where flame retardancy is required, the rapid evolution of electronic devices, represented by smartphones, has led to a change in properties required for flame retardants to those more advanced. Particularly in the information and communications field, frequency of signals has become higher involving an increased amount of information processed, and in order to reduce a transmission loss, flame retardant materials with a low dielectric constant and low dielectric loss tangent, have also been strongly required. Furthermore, there are a wide range of requirements, such as low moisture absorption, stability of their properties in response to environmental changes, and heat resistance. As a flame retardant of exhibiting low electric properties that can be applied to epoxy resin compositions that exhibit low dielectric properties, Patent Literature 5 discloses that a phosphorus-containing active ester introduced with a DOPO molecular framework exhibits flame retardancy and low dielectricity. As was described above, epoxy resins and phosphorus-containing curing agents capable of imparting flame retardancy without reducing general properties such as heat resistance by the introduction of DOPO into their structures, have been widely known, however, there is a problem that the DOPO molecular framework is prone to hydrolysis, resulting in a significant change of dielectric properties after moisture and water absorption due to a hydroxyl group produced by the hydrolysis. As a countermeasure of the problem, Patent Literature 5 discloses a phenolic compound of phosphate ester type having dielectric properties that has a low change after water absorption, which is however, not satisfactory in terms of dielectric properties and heat resistance, and there are still no flame retardants that meet a high level of demand.

### Citation List

### Patent Literature

Patent Literature 1: JP5678109B
Patent Literature 2: JP7-292050A
Patent Literature 3: JP2002-97260A
Patent Literature 4: JP5637418B
Patent Literature 5: WO2021/256351

### Summary of Invention

Accordingly, a problem to be solved by the present invention is to provide a phosphorus-containing polycyclic aromatic hydroxy compound that yields a cured product having excellent flame retardancy, heat resistance, and dielectric properties, wherein the compound has a small water absorption rate and dielectric properties that has a low change after water absorption, a curable resin composition containing the phosphorus-containing polycyclic aromatic hydroxy compound and a curable resin, an epoxy resin composition using the same as a curing agent, a cured product thereof, and a method for producing the phosphorus-containing polycyclic aromatic hydroxy compound.

The present inventors have found as a result of diligent investigations of the above-described problems that a phosphorus-containing polycyclic aromatic hydroxy compound having a specific structure, has excellent heat resistance and dielectric properties, has a low change in dielectric properties after water absorption, and therefore the present invention has been made.

The present invention is a phosphorus-containing polycyclic aromatic hydroxy compound represented by general formula (1), 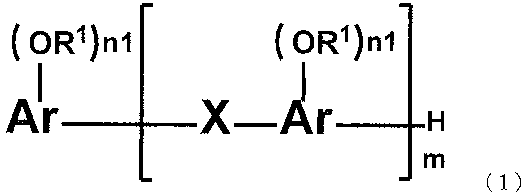 wherein, in general formula (1), m is an integer of 1 to 20; n1 is each independently an integer of 1 to 4; and Ar is each independently an aromatic ring having 6 to 30 carbon atoms (excluding a benzene ring) optionally having a substituent, R1 is each independently hydrogen, a linear or branched alkyl group having 1 to 5 carbon atoms, or a substituent represented by general formula (2), provided that at least one R1 comprises a structure of the general formula (2), X represents a linking group and is each independently oxygen, sulfur, a substituted or unsubstituted cycloalkylene having 3 to 20 carbon atoms; a substituted or unsubstituted aralkylene having 8 to 32 carbon atoms, and 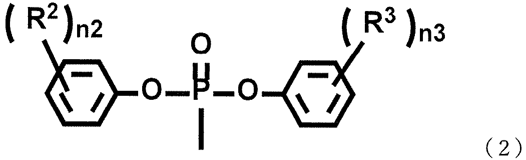 wherein, in general formula (2), R2 and R3 are each independently a linear or branched alkyl group having 1 to 5 carbon atoms, and n2 and n3 are each independently an integer of 0 to 5.

The present invention is the phosphorus-containing polycyclic aromatic hydroxy compound represented by the following general formula (3), 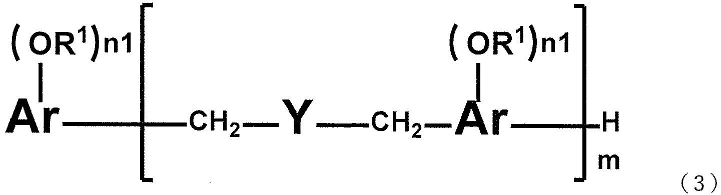 wherein, in general formula (3), R1, n1, and m are the same as in the general formula (1), Y is an aromatic cyclic group having 6 to 30 carbon atoms optionally having a substituent, Ar represents a polycyclic aromatic group derived from a polycyclic aromatic compound represented by the following general formula (4), (5), or (6), and 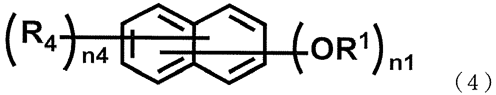 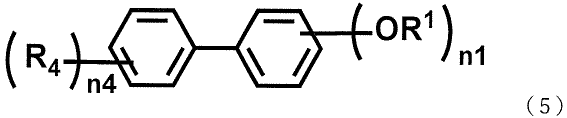 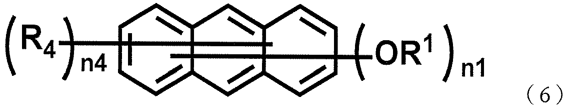 wherein, in general formula (4), (5), and (6), R4 is each independently an alkyl group having 1 to 10 carbon atoms, an alkoxy group having 1 to 10 carbon atoms, and n4 is an integer of 0 to 4, and R1 and n1 are the same as in the general formula (1).

The phosphorus-containing polycyclic aromatic hydroxy compound having a hydroxyl equivalent of 100 to 3000 g/eq and a phosphorus content of 1.5 to 15.0% by mass, is preferable.

The present invention is a method for producing the phosphorus-containing polycyclic aromatic hydroxy compound, comprising reacting 0.1 to 0.9 mol of a compound represented by the following general formula (8) with per mole of a hydroxyl group of a polycyclic aromatic hydroxy compound represented by the following general formula (7), 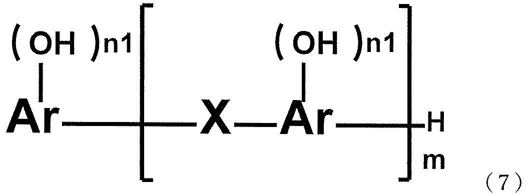 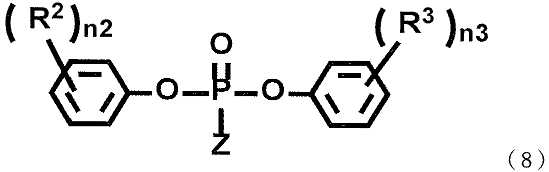 wherein, in general formula (7) and (8), **m,** n1, Ar, X, R2, R3, n2, and n3 are the same as in the general formulae (1) and (2), and Z represents a halogen atom.

The present invention is a curable resin composition comprising the above-described phosphorus-containing polycyclic aromatic hydroxy compound and a curable resin. The present invention is a cured product obtained by curing the curable resin composition.

The phosphorus-containing polycyclic aromatic hydroxy compound of the present invention has dielectric properties that has a low change after water absorption and is very useful as a flame retardant material for reducing a transmission loss at high frequencies accompanying an increase in the amount of information processed in electronic devices.

### Brief Description of Drawing

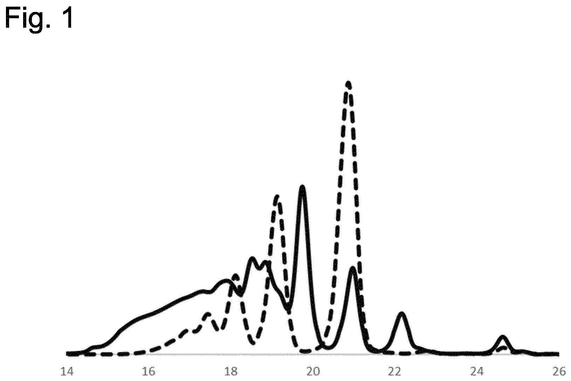

[Figure 1] Figure 1 shows a GPC chart of a phosphorus-containing polycyclic aromatic hydroxy compound obtained in Example 1 (the dotted line is a raw material and the solid line is a product).

### Description of Embodiments

Hereinafter, the present invention will be described in detail.

The phosphorus-containing polycyclic aromatic hydroxy compound of the present invention is represented by the following general formula (1).

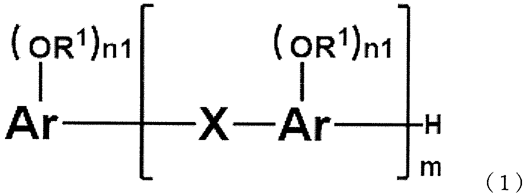

The phosphorus-containing polycyclic aromatic hydroxy compound represented by the general formula (1) has an integer m of 1 to 20, and encompasses not only a single compound of a form having m of 1, but also a mixture containing a form having m of 2 and forms having m of 3 or more.

Ar is each independently a substituted or unsubstituted aromatic cyclic group (excluding a benzene ring) having 3 to 30 carbon atoms. Examples of the aromatic cyclic groups include, but are not limited to, compounds in which one or two hydrogen atoms have been removed from monocyclic aromatic compounds such as furan, pyrrole, thiophene, imidazole, pyrazole, oxazole, isoxazole, thiazole, isothiazole, pyridine, pyrimidine, pyridazine, pyrazine, and triazine; compounds in which one or two hydrogen atoms have been removed from fused-ring aromatic compounds such as naphthalene, anthracene, phenalene, phenanthrene, quinoline, isoquinoline, quinazoline, phthalazine, pteridine, coumarin, indole, benzimidazole, benzofuran, and acridine, and the like. Compounds in combinations of two or more of these aromatic compounds may also be used and examples thereof include compounds in which one or two hydrogen atoms have been removed from ring-aggregated aromatic compounds such as biphenyl, binaphthalene, bipyridine, bithiophene, phenylpyridine, phenylthiophene, terphenyl, diphenylthiophene, and quaterphenyl, and the like.

In terms of flame retardancy and dielectric properties, fused-ring aromatic compounds such as naphthalene and anthracene, and a ring-aggregated aromatic compound such as biphenyl are more preferable than a single-ring compound such as benzene.

Specifically, Ar is preferably a group derived from one or more selected from the group consisting of fused-ring aromatic compounds represented by the following general formula (4) or (6) and ring-aggregated aromatic compounds represented by the following general formula (5). More preferably, Ar is a group derived from fused-ring aromatic compounds represented by the following general formula (4). Here, in the polycyclic aromatic hydroxy compound that is the raw material, R1 is each independently hydrogen or a linear or branched alkyl group having 1 to 5 carbon atoms, and R1 is preferably hydrogen.

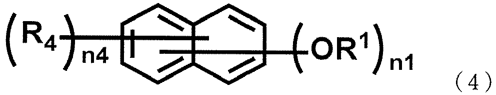

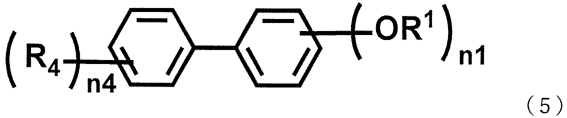

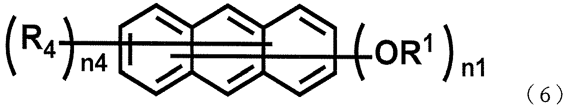

In the general formulae (4), (5), and (6), R4 represents a substituent on the aromatic ring and is each independently an alkyl group having 1 to 10 carbon atoms, an alkoxy group having 1 to 10 carbon atoms and preferably an alkyl group having 1 to 10 carbon atoms. n4 is an integer of 0 to 4.

The alkyl group having 1 to 10 carbon atoms is not particularly limited, but includes a methyl group, an ethyl group, a propyl group, an isopropyl group, a n-butyl group, an isobutyl group, a sec-butyl group, a tert-butyl group, a n-pentyl group, an isopentyl group, a tert-pentyl group, a neopentyl group, a 1,2-dimethylpropyl group, a n-hexyl group, an isohexyl group, a n-nonyl group, a cyclopropyl group, a cyclobutyl group, a cyclopentyl group, a cyclohexyl group, a cycloheptyl group, a cyclooctyl group, and a cyclononyl group, and is preferably a methyl group, an ethyl group, a propyl group, an isopropyl group, a n-butyl group, an isobutyl group, a sec-butyl group, and a tert-butyl group, and more preferably a methyl group and an ethyl group.

The alkoxy group having 1 to 10 carbon atoms is not particularly limited, but examples thereof include a methoxy group, an ethoxy group, a propoxy group, an isopropoxy group, a butoxy group, a pentyloxy group, a hexyloxy group, a 2-ethylhexyloxy group, an octyloxy group, a nonyloxy group, and the like.

These substituents may be used singly or in combination of two or more thereof.

In the general formula (1), R1 represents hydrogen, a linear or branched alkyl group having 1 to 5 carbon atoms, or a substituent represented by the following general formula (2), and n1 is an integer of 1 to 4. Preferably R1 is hydrogen or a substituent represented by the following general formula (2).

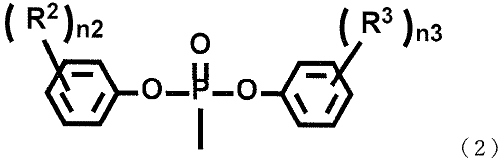

In the general formula (2), R2 and R3 are each independently a linear or branched alkyl group having 1 to 5 carbon atoms.

Specific examples of the alkyl groups having 1 to 5 carbon atoms include a methyl group, an ethyl group, a propyl group, an isopropyl group, a n-butyl group, an isobutyl group, a tert-butyl group, a n-pentyl group, an isopentyl group, a neopentyl group, and the like. Among these, from the viewpoint of reactivity in production and availability, a methyl group, an ethyl group, a propyl group, and an isopropyl group are preferred, and a methyl group is particularly preferred.

n2 and n3 are each independently an integer of 0 to 5 and preferably an integer of 0 to 2. When n2 or n3 are 1 or greater, substitution positions of n2 or n3 on the aromatic ring are not limited, but in order to prevent hydrolysis of a phosphate ester, they are preferably ortho positioned to oxygen.

It is to be noted that in the general formula (1), at least one R1 includes the structure of the general formula (2). Including the structure of the general formula (2) makes it possible for the phosphorus-containing polycyclic aromatic hydroxy compound of the present invention to exhibit flame retardancy.

The phosphorus-containing polycyclic aromatic hydroxy compound of the present invention preferably has both a substituent in which R1 is hydrogen and a substituent in which R1 is represented by the general formula (2) in its structure from the viewpoint of heat resistance and flame retardancy. Also, partially including a linear or branched alkyl group having 1 to 5 carbon atoms improves solubility, which is preferable, but, reduces heat resistance, so that a proportion of the alkyl group is preferably 20 mol% or less relative to the total of hydrogen, the substituent represented by the general formula (2), and the alkyl group. When the above compound has a molecular weight distribution resulting from a repeating unit represented by m, it may also include a structure in which all R1s are hydrogen or a structure in which all R1s are substituents represented by the general formula (2), however, it is necessary to satisfy the following hydroxyl equivalent and phosphorus content, taking into account of m that is averaged. Its production method will be described in detail below, but the phenolic compound of the present invention can be obtained by reacting the polycyclic aromatic hydroxy compound represented by the general formula (7) described later with the phosphorus compound represented by the general formula (8). Then, a presence ratio of the substituent represented by the general formula (2) can be calculated from a difference between a hydroxyl equivalent of the polycyclic aromatic hydroxy compound represented by the general formula (7) and a hydroxyl equivalent of the phosphorus-containing polycyclic aromatic hydroxy compound represented by the general formula (1). The presence ratio of the substituent represented by the general formula (2) may be any ratio as long as it is not 0 mol%, but the less the presence ratio, the poorer the flame retardancy tends to be, and the more the presence ratio, the more the heat resistance tends to be deteriorated, so that the presence ratio is preferably 10 to 90 mol%, more preferably 25 to 80 mol%, and still more preferably 30 to 60 mol%. In this case, adjusting the hydroxyl equivalent and the phosphorus content to the predetermined ranges enables exhibition of well-balanced performance.

A hydroxyl equivalent of the phosphorus-containing polycyclic aromatic hydroxy compound is preferably 100 to 3000 g/eq, more preferably 200 to 2000, and still more preferably 300 to 1500 g/eq. It is to be noted that the more the phosphorus content, the more preferable it is from the viewpoint of flame retardancy, however, the increase of the phosphorus content causes viscosity augmentation and deterioration in handleability, so that the content is preferably 1.5 to 15.0% by mass, more preferably 2.0 to 13.0% by mass, and still more preferably 3.0 to 12.0% by mass.

In the general formula (1), X represents a linking group, and as is clarified from the description of the above chemical formula (1), one of hydrogen atoms of the aromatic ring constituting an aromatic ring of Ar is bonded to "X". X is each independently oxygen, sulfur, a substituted or unsubstituted cycloalkylene having 3 to 20 carbon atoms, or an aralkylene having 8 to 32 carbon atoms.

The cycloalkylene is not particularly limited, but examples thereof include cyclopropylene, cyclobutylene, cyclopentylene, cyclohexylene, cyclopentylene, cycloheptylene, cycloalkylenes represented by the following chemical formulae (9) to (12), and the like.

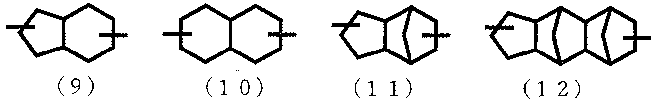

The aralkylene is not particularly limited, but examples thereof include aralkylenes represented by the following chemical formulae (13) to (19), and the like.

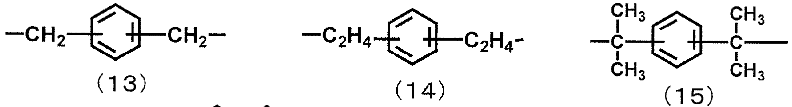

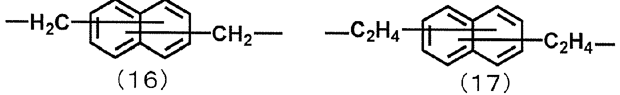

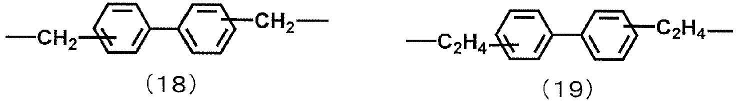

The cycloalkylene and the aralkylene may have a substituent. In this case, their substituents may be alkyl groups or alkoxy groups having 1 to 10 carbon atoms, or aryl groups. Examples of the aryl groups include a phenyl group, a tolyl group, a xylyl group, a hydroxyphenyl group, a benzyl group, a naphthyl group, and the like.

The phosphorus-containing polycyclic aromatic hydroxy compound of the present invention is more preferably a structure represented by the following general formula (3).

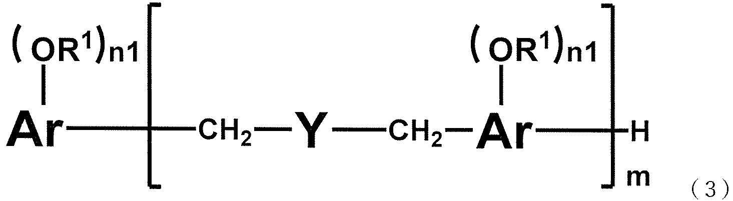

In the general formula (3), R1, Ar, n1, and m are the same as in general formula (1). Wherein, in the polycyclic aromatic hydroxy compound that is a raw material, R1 is each independently hydrogen or a linear or branched alkyl group having 1 to 5 carbon atoms, and preferably R1 is hydrogen.

Y represents an aromatic cyclic group having 6 to 30 carbon atoms, and preferably, the linking group of Ar, -CH2-Y-CH2-, has a structure represented by the formula (13), (16), or (18). More preferably, the linking group of Ar, -CH2-Y-CH2-, has a structure represented by the formula (13).

Next, a method for producing the phosphorus-containing polycyclic aromatic hydroxy compound of the present invention will be described. The phosphorus-containing polycyclic aromatic hydroxy compound of the present invention is an aromatic phosphate ester having one or more phenolic hydroxyl groups, and the method for producing thereof is similar to a general method for producing an aromatic phosphate ester. That is, one example of the reaction form is an esterification reaction using a phosphorus oxyhalide (phosphoryl halide) and a polycyclic aromatic hydroxy compound as raw materials, and the corresponding phosphate ester can be obtained by a dehydrohalogenation reaction.

In order to prevent a hydrolysis reaction catalyzed by a by-product hydrogen halide that acts as a catalyst and is produced as a by-product and to obtain a product efficiently, this esterification reaction is carried out in operations such as use of catalyst and, removal of released hydrogen halide from the reaction system.

The released hydrogen halide (for example, hydrogen chloride) is gas and increases in volume when gasified, so that it is easily released outside the reaction system in case of using highly reactive raw materials, but in case of using low-reactivity raw materials, the hydrogen halide is released in less amount and is likely to remain in the system, which may result in occurrence of hydrolysis reaction. In such cases, it is effective to capture the generated hydrogen halide to prevent the hydrolysis reaction, and amines may be used as hydrogen halide scavengers.

The phosphorus-containing polycyclic aromatic hydroxy compound of the present invention being the compound represented by the above general formula (1), is obtained by a reaction of, as raw materials, a polycyclic aromatic hydroxy compound: represented by the following general formula (7) corresponding to the general formula (1) 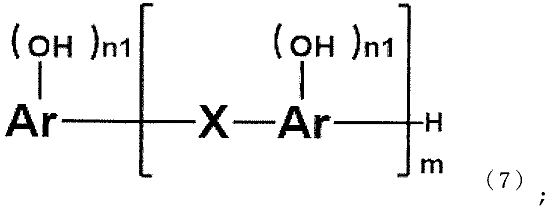 with phenols and phosphorus oxyhalide: raw feedstocks for a phosphorus halide compound represented by the following general formula (8) corresponding to the above general formula (2).

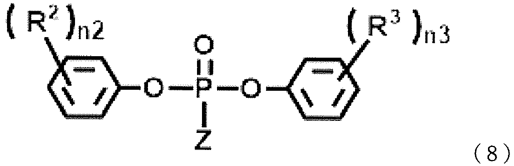

In the general formulae (7) and (8), Ar, X, m, n1, R2, R3, n2, and n3 are the same as in general formulae (1) and (2). Z represents a halogen atom.

When the polycyclic aromatic hydroxy compound having a plurality of hydroxyl groups represented by the general formula (7), an essential raw material for the phosphorus-containing polycyclic aromatic hydroxy compound of the present invention, is reacted with phosphorus oxyhalide, however, a side reaction occurs in which the plurality of hydroxyl groups reacts with the phosphorus oxyhalide. So that, it is necessary to appropriately adjust a reaction order, a feed ratio of raw materials, reaction conditions, or the like, in order to efficiently obtain a target compound.

In this regard, instead of reacting the three raw materials of the polycyclic aromatic hydroxy compound represented by the general formula (7), the phenols and phosphorus oxyhalide which are the raw materials for the phosphorus halide compound represented by the general formula (8) at once, the phosphorus oxyhalide, for example, phosphorus oxychloride (POCl3), is reacted with the phenols first to obtain a phosphorus halide compound represented by the following general formula (8), and then the obtained phosphorus halide compound represented by the general formula (8) is reacted with the polycyclic aromatic hydroxy compound represented by the general formula (7), making it possible to efficiently obtain the target compound. In this case, in the prior stage reaction, the phenols is compounded in a proportion of 2 mol per mole of the phosphorus oxyhalide. The phenols is preferably compounded in an amount within the range of 1.8 to 2.2 mol and more preferably 1.9 to 2.1 mol.

The phenols used as the raw material for the phosphorus halide compound represented by the general formula (8) is preferably monovalent phenols unsubstituted or substituted with an alkyl group having 1 to 6 carbon atoms. Specific examples thereof include phenol, o-cresol, m-cresol, p-cresol, o-ethylphenol, methylphenol, p-ethylphenol, o-isopropylphenol, m-isopropylphenol, p-isopropylphenol, o-tert-butylphenol, m-tert-butylphenol, p-tert-butylphenol, o-phenylphenol, m-phenylphenol, p-phenylphenol, 2,6-xylenol, 2,6-diethylphenol, etc.

These phenols may be used singly or in combination of two or more thereof.

Examples of the phosphorus-containing polycyclic aromatic hydroxy compounds of the present invention include, but are not limited to, compounds having the following structure and mixtures thereof:
A compound of the following formula (9) in which R1 is each independently hydrogen, a linear or branched alkyl group having 1 to 5 carbon atoms, or a substituent of the following formula (10);

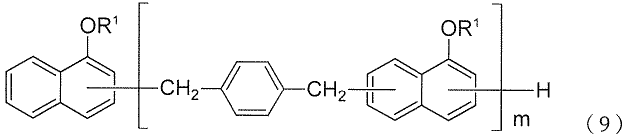

In the formula (9), m is the same as that in general formula (1).

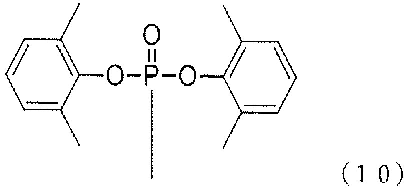

A compound of the formula (9) in which R1 is each independently hydrogen, a linear or branched alkyl group having 1 to 5 carbon atoms, or a substituent of the following formula (11);

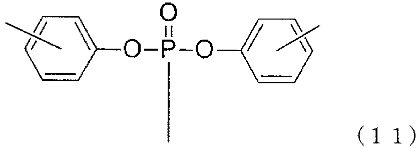

A compound of the formula (9) in which R1 is each independently hydrogen, a linear or branched alkyl group having 1 to 5 carbon atoms, or a substituent of the following formula (12).

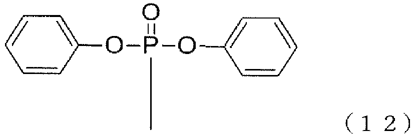

Examples of the phosphorus oxyhalide, which is a raw material for the phosphorus halide compound represented by the general formula (8), include phosphorus oxychloride and phosphorus oxybromide.

Since the phosphorus-containing polycyclic aromatic hydroxy compound of the present invention can be obtained by reacting a hydroxyl group of the polycyclic aromatic hydroxy compound represented by the general formula (7) with the phosphorus halide compound represented by the general formula (8), adjusting a molar ratio of the compound of the general formula (8) to the hydroxyl group of the polycyclic aromatic hydroxy compound enables control of hydroxyl equivalent and phosphorus content.

A reaction molar ratio of the phosphorus halide compound represented by the general formula (8) per mole of a hydroxyl group of the polycyclic aromatic hydroxy compound represented by the general formula (7), is preferably 0.1 to 0.9 mol, more preferably 0.2 to 0.8 mol, and still more preferably 0.3 to 0.7 mol. When it is 0.1 mol or less, the phosphorus content decreases, resulting in insufficient flame retardancy, which is not preferable. In the case of 0.9 mol or more, the hydroxyl group that is a reactive group decreases in its amount, resulting in insufficient heat resistance and a higher viscosity, which is not preferable.

The curable flame-retardant resin composition of the present invention contains the above-described phosphorus-containing polycyclic aromatic hydroxy compound as an essential component, and can be obtained by mixing a curable resin with the phosphorus-containing polycyclic aromatic hydroxy compound. The curable resin is not limited as long as it reacts with a hydroxyl group of the phosphorus-containing polycyclic aromatic hydroxy compound of the present invention, and examples of the curable resins include an epoxy resin, a maleimide resin, and the like.

The epoxy resin that can be used in the present curable resin composition is not particularly limited, and examples thereof include, for example, a bisphenol A epoxy resin, a bisphenol F epoxy resin, a bisphenol S epoxy resin, a bisphenol AF epoxy resin, a phenol novolac epoxy resin, a naphthol novolac epoxy resin, a dicyclopentadiene epoxy resin, a phenol aralkyl epoxy resin, a naphthol epoxy resin, a naphthol aralkyl epoxy resin, a naphthalene epoxy resin, a glycidylamine epoxy resin, a cresol novolac epoxy resin, a biphenyl epoxy resin, a tetramethylbiphenyl epoxy resin, a chain aliphatic epoxy resin, an alicyclic epoxy resin, a heterocyclic epoxy resin, a spiro ring-containing epoxy resin, a cyclohexane dimethanol epoxy resin, a trimethylol epoxy resin, a halogenated epoxy resin and the like, a triphenylmethane epoxy resin, and a tetraphenylethane epoxy resin. These epoxy resins may be used singly or two or more thereof may be mixed.

The blended amount of the phosphorus-containing polycyclic aromatic hydroxy compound relative to the epoxy resin is determined based on the phosphorus content of the resin composition. The phosphorus content in the resin composition is preferably 0.5 to 5.0% by mass and more preferably 1.0 to 4.0% by mass. When the phosphorus content is 0.5% by mass or less, flame retardancy is not exhibited, and when being 5.0% by mass or more, the blended amount of phosphorus-containing polycyclic aromatic hydroxy compound is large, and the hydroxyl group is excessive in amount relative to epoxy groups, resulting in a brittle cured product with insufficient crosslinking. Also, when the epoxy resin is used as the curable resin, it may contain a curing agent other than the phosphorus-containing polycyclic aromatic hydroxy compound of the present invention.

Examples of curing agents that can be used in combination with the phosphorus-containing polycyclic aromatic hydroxy compound, include, for example, a phenolic curing agent, an amine-based compound, an amide-based compound, an acid anhydride-based compound, a naphthol curing agent, an active ester-based curing agent, a benzoxazine curing agent, a cyanate ester-based curing agent, and an acid anhydride-based curing agent. These may be used singly or in combination of two or more thereof.

The blended amount of curing agent other than the phosphorus-containing polycyclic aromatic hydroxy compound of the present invention is an blended amount that is the phosphorus content of the resin composition of the present invention of preferably 0.5 to 5.0% by mass, and a molar ratio (Nh/Ne) of the total amount by mole of reaction points between the phosphorus-containing polycyclic aromatic hydroxy compound and an epoxy group of the other curing agent (Nh) to the amount by mole of epoxy groups (Ne) is 0.7 to 1.3 and preferably 0.9 to 1.1. The molar ratio outside this range results in a brittle cured product with insufficient crosslinking, which is not preferred.

The resin composition of the present invention may also contain a curable resin other than the epoxy resin. Examples of the curable resins other than the epoxy resin can include radical polymerizable resins such as a vinyl ester resin, a polyvinylbenzyl resin, an unsaturated polyester resin, a curable vinyl resin, and a maleimide resin, and a cyanate resin.

The curable resin composition of the present invention may contain a curing accelerator, if necessary. Examples of the curing accelerators used herein include, for example, a phosphorus-based compound, a tertiary amine, an imidazole, an organic acid metal salt, a Lewis acid, and an amine complex salt. The amount of the curing accelerator added is preferably 0.1 to 10.0 parts by weight relative to 100 parts by weight of the total of the phosphorus-containing polycyclic aromatic hydroxy compound, the curable resin, and the other curing agent.

In addition to the above-described components, the resin composition of the present invention may be compounded with other component such as a thermosetting resin, a thermoplastic resin, an organic filler, an inorganic filler, an organic solvent, a thickener, an antifoaming agent, an adhesiveness-imparting agent, a coloring agent, or an additive, as appropriate.

Examples of the thermoplastic resins can include polystyrene, a polyphenylene ether resin, a polyetherimide resin, a polyethersulfone resin, a PPS resin, a polycyclopentadiene resin, a polycycloolefin resin, and the like, known thermoplastic elastomers such as a styrene-ethylene-propylene copolymer, a styrene-ethylene-butylene copolymer, a styrene-butadiene copolymer, a styrene-isoprene copolymer, a hydrogenated styrene-butadiene copolymer, a hydrogenated styrene-isoprene copolymer, and the like, or rubbers such as polybutadiene and polyisoprene. Preferred examples thereof can include a polyphenylene ether resin (unmodified) and a hydrogenated styrene-butadiene copolymer.

The curable resin composition of the present invention can be compounded with a filler. Examples of the fillers include those added to enhance heat resistance and flame retardancy of a cured product of the curable resin composition, and known fillers can be used, but are not limited thereto. Also, the inclusion of filler enables further enhancement of heat resistance, dimensional stability, flame retardancy, and the like. Specific examples of the fillers include silica such as spherical silica, metal oxides such as alumina, titanium oxide, and mica, metal hydroxides such as aluminum hydroxide and magnesium hydroxide, talc, aluminum borate, barium sulfate, calcium carbonate, and the like. When a metal hydroxide such as aluminum hydroxide or magnesium hydroxide is used, it acts as a flame retardant aid, and can ensure flame retardancy with a little phosphorus content. Among these, preferred are silica, mica, and talc, and more preferred is spherical silica. Also, these may be used singly or in combination of two or more thereof.

The filler may be used as it is or those surface-treated with a silane coupling agent of vinyl silane type, methacryloxy silane type, acryloxy silane type, or styryl silane type, or a silane coupling agent of epoxy silane type, amino silane type, or cationic silane type, may be used. This enhances adhesive strength with a metal foil and interlayer adhesive strength between resins. Also, instead of a method of preliminarily surface-treating the filler, the above-described silane coupling agent may be added by an integral blending method.

The content of the filler is preferably 10 to 200 parts by mass and more preferably 30 to 150 parts by mass, relative to 100 parts by mass of the total solid content excluding the filler (including organic components such as the monomers and the flame retardant and excluding a solvent).

The curable resin composition of the present invention may further contain an additive other than those described above. Examples of the additives include, for example, antifoaming agents such as a silicone antifoaming agent and an acrylic acid ester antifoaming agent, a heat stabilizer, an antistatic agent, an ultraviolet absorber, a dye and a pigment, a lubricating agent, and a dispersant such as a wetting dispersant.

A cured product obtained by curing the curable resin composition of the present invention can be used as a molded product, a laminate, a cast product, an adhesive, a coating film, or a film. For example, a cured product of a semiconductor encapsulation material is a cast product or a molded product, and a method for obtaining a cured product for such applications is a method that includes casting a curable resin composition or molding it using a transfer molding machine, injection molding machine, or the like, and then heating it at 80 to 230°C for 0.5 to 10 hours to be able to obtain a cured product.

The curable resin composition of the present invention can also be used as a prepreg. In production of prepreg, a prepreg in varnish form can be prepared for the purpose of impregnating a substrate (fibrous substrate) for forming the prepreg, with the composition, or for the purpose of using it as a circuit board material to form a circuit board, and a resin varnish can be then prepared.

This resin varnish is suitable for circuit boards and can be used as a varnish for circuit board materials. It is to be noted that specific uses of the circuit board materials referred to herein include printed wiring boards, printed circuit boards, flexible printed wiring boards, build-up wiring boards, and the like.

The above-described resin varnish is prepared, for example, as follows.

First, each component that can be dissolved in an organic solvent, such as the phosphorus-containing polycyclic aromatic hydroxy compound of the present invention and the epoxy resin component, is fed to an organic solvent and dissolved. At this time, the mixture may be heated, if necessary. Thereafter, if necessary, a component that cannot be dissolved in the organic solvent, such as an inorganic filler, is added, and dispersed using a ball mill, a bead mill, a planetary mixer, a roll mill, or the like, to prepare a curable resin composition in a varnish form. The organic solvent used herein is not particularly limited as long as it dissolves the resin components used in the epoxy resin composition of the present invention and does not prevent a curing reaction. Examples thereof include, for example, ketones such as acetone, methyl ethyl ketone, and methyl isobutyl ketone; esters such as ethyl acetate, propyl acetate, and butyl acetate; polar solvents such as dimethylacetamide and dimethylformamide; aromatic hydrocarbon solvents such as toluene and xylene; and the like, and they can be used singly or two or more thereof can be mixed and used.

The amount of the organic solvent used when preparing the resin varnish is preferably 5 to 900% by mass, more preferably 10 to 700% by mass, and particularly preferably 20 to 500% by mass, relative to 100% by mass of the curable resin composition of the present invention.

A substrate used to prepare the prepreg is a known material, and for example, a glass fiber, a carbon fiber, a polyester fiber, a polyamide fiber, an alumina fiber, and paper, are used singly or in combination of two or more thereof. For these substrates, a coupling agent can be used in order to improve adhesiveness at an interface between the resin and the substrate, if necessary. As the coupling agent, general coupling agents such as a silane coupling agent, a titanate coupling agent, an aluminum coupling agent, and a zircoaluminate coupling agent can be used.

An example of a method for obtaining the prepreg of the present invention includes a method for impregnating the substrate with the above-described resin varnish and then drying it. The impregnation is carried out by immersion (dipping), coating, or the like. The impregnation can be repeated a plurality of times, if necessary, and in this case, it is also possible to repeat the impregnation using a plurality of solutions with different compositions and concentrations to adjust the final resin composition and resin amount as desired. After impregnation, a prepreg can be obtained by heating and drying at 100 to 180°C for 1 to 30 minutes. Herein, the amount of resin in the prepreg is preferably 30 to 80% by mass of the resin content.

The curable resin composition of the present invention can also be used as a laminated board. When the laminated board is formed using the prepreg, one or more prepregs are stacked, a metal foil is arranged on one or both sides of the prepreg to form a laminate, and this laminate is heated and pressed to stack and integrate them. Herein, the metal foil can be a single metal foil such as copper, aluminum, brass, and nickel, an alloy metal foil, or a composite metal foil. The conditions for heating and pressing the laminate can be appropriately adjusted so that the curable resin composition is cured, however, when the pressure is too low, air bubbles may remain inside the obtained laminate board, which may result in deterioration of electrical properties, so that the laminate is preferably pressed under conditions that satisfy its moldability. For example, a temperature can be set to 180 to 230°C, pressure to 49.0 to 490.3 N/cm² (5 to 50 kgf/cm²), and a heating and pressing time to 40 to 240 minutes, respectively. Furthermore, using the single-layer laminated board thus obtained as an inner layer material, a multilayer board can be produced. In this case, a circuit is first formed on the laminated board by an additive method, a subtractive method, or the like, and a surface of the formed circuit is then subjected to blackening treatment with an acid solution to obtain the inner layer material. An insulating layer is formed on one or both circuit-formed surfaces of this inner layer material, using a resin sheet, a metal foil with a resin, or a prepreg, as well as a conductor layer is formed on the surface of the insulating layer to form a multilayer board.

An example of the method for producing a build-up film from the curable composition of the present invention is a method that includes, for example, coating a surface of a support film with the above-described resin varnish and drying it to form an insulating layer in film form. The insulating layer in film form thus formed can be used as a build-up film for multilayer printed wiring boards.

In the drying step, the build-up film resin composition is preferably dried so that the content of organic solvent in the layer is 10% by mass or less and preferably 5% by mass or less. The drying conditions vary depending on the type of organic solvent and the amount of organic solvent in a varnish, but the drying can be performed at 50 to 160°C for approximately 3 to 20 minutes.

A thickness of the build-up film to be formed on a support is usually a thickness of a conductive layer or more. Since a thickness of the conductive layer in a circuit board is usually in a range of 5 to 70 µm, so that a thickness of the resin composition layer is preferably 10 to 100 µm.

It is to be noted that the build-up film of the present invention is preferably protected by a protective film in terms of being capable of preventing adhesion of dirt and the like on a surface and scratches.

Examples of the support film and the protective film described above can include polyolefins such as polyethylene, polypropylene, and polyvinyl chloride, polyesters such as polyethylene terephthalate and polyethylene naphthalate, polycarbonate, polyimide, furthermore, release paper, metal foils such as a copper foil and an aluminum foil, and the like. It is to be noted that the support film and the protective film may be subjected to release treatment in addition to mud treatment and corona treatment.

A thickness of the support film is not particularly limited, but is usually 10 to 150 µm and preferably in a range of 25 to 50 µm. The thickness of the protective film is preferably 1 to 40 µm.

The support film described above is peeled off after having laminated it on a circuit board, or after having formed an insulating layer by heating and curing. When the support film is peeled off after an adhesive film has been heated and cured, it is possible to prevent inhibition of curing due to oxygen in a curing step, and further to prevent adhesion of dirt and the like. In the case of peel-off after curing, the support film is usually subjected to preliminary release treatment.

### Examples

Next, the present invention will be described with reference to Examples, but the present invention is not limited thereto. The parts in each Example are all represented as parts by weight.

Note that the physical properties of each cured samples in Examples were measured by the following methods.
(1) Molecular weight and molecular weight distribution of polymer: The molecular weight and molecular weight distribution of phosphorus-containing polycyclic aromatic hydroxy compounds were measured using GPC (HLC-8120GPC manufactured by TOSOH CORPORATION) with tetrahydrofuran as the solvent, a flow rate of 1.0 ml/min, a column temperature of 38°C, with a calibration curve based on monodisperse polystyrenes.
(2) Hydroxyl equivalent: Approximately 6 mg/eq of sample was precisely weighed into a 100 mL flask equipped with a stopper, and 3 mL of a mixed reagent of acetic anhydride/pyridine = 3/1 (volume ratio) was added. A cooling tube was attached to the flask, and the mixture was heated to reflux on a hot plate for 5 minutes, cooled for 5 minutes, and then 1 mL of water was added thereto. The liquid was subjected to potentiometric titration with a 0.5 mol/L KOH/MeOH solution to calculate the hydroxyl equivalent.
(3) Phosphorus content: Sulfuric acid, hydrochloric acid, and perchloric acid were added to the sample, which was then heated and wet-ashed to convert all phosphorus atoms into orthophosphoric acid. Metavanadate and molybdate were reacted in a sulfuric acid acidic solution, and an absorbance of the resulting phosphorus vanadate-molybdate complex at 420 nm was measured. A phosphorus atom content was calculated using a calibration curve preliminarily prepared using potassium dihydrogen phosphate, and the obtained content was represented as % by mass.
(4) Glass transition temperature: It was calculated from the amount of a baseline shift at a rate of temperature rise of 10°C/min using differential scanning calorimetry (manufactured by Hitachi High-Tech Science Corporation).
(5) Relative permittivity and dielectric loss tangent:
   The dielectric constant (Dk) and dielectric loss tangent (Df) at a frequency of 1 GHz were calculated by the capacitance method using a material analyzer E4991A (manufactured by AGILENT Technologies, Inc.) in accordance with the IPC-TM-6502.5.5.9 Standard, under an environment of 25°C and 60% humidity.
(6) Flame retardancy: It was evaluated using the vertical method using five test pieces in accordance with the UL94 test method. The evaluation results were ranked as V-0, V-1, or V-2.
(7) Water absorption rate: In accordance with JIS K 7209, the amount of saturated water was determined after having a cured sample immersed in water at 23°C.
(8) Rate of change in dielectric properties after water absorption: The rate of change was calculated from the following formula using value of the cured sample measured before water absorption test (A1) and value measured after water absorption (A2). Rate of change in dielectric properties (%) = (A2 - A1)/A1 × 100

In Synthesis Examples, Examples, and Comparative Examples, the following compounds were used as raw materials.
- Phosphorus oxychloride (manufactured by Tokyo Chemical Industry Co., Ltd.)
- Resorcinol (manufactured by Tokyo Chemical Industry Co., Ltd.)
- 2,6-Dimethylphenol (manufactured by Tokyo Chemical Industry Co., Ltd.)
- SN-485 (naphthol aralkyl resin: hydroxyl equivalent 212 g/eq, manufactured by NIPPON STEEL Chemical & Material Co., Ltd.)
- SP-2060N (phenol novolac resin: hydroxyl equivalent 107 g/eq, manufactured by NIPPON STEEL Chemical & Material Co., Ltd.)
- MEH-7800 (phenol aralkyl resin: hydroxyl equivalent 175 g/eq, manufactured by MEIWA PLASTIC INDUSTRIES, LTD.)
- MEH-7851M (biphenyl aralkyl resin: hydroxyl equivalent 199 g/eq, manufactured by MEIWA PLASTIC INDUSTRIES, LTD.)

### (Synthesis Example 1) Synthesis of di-2,6-xylyl phosphorochloridate (DXPC)

A 2L four-neck flask equipped with a stirrer, thermometer, and hydrochloric acid collection apparatus (condenser connected to a water scrubber) was filled with 767 g (5 mol) of phosphorus oxychloride (structural formula below),

**POCl₃**

1200 g (9.8 mol) of 2,6-dimethylphenol (structural formula below), 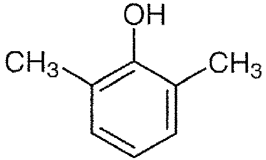 140 g of xylene as a solvent, and 6.2 g (0.065 mol) of magnesium chloride as a catalyst. The resulting mixed solution was gradually heated and raised to a temperature of 160°C over approximately 3 hours while stirring to react the mixture, and the generated hydrogen chloride gas was collected with the water scrubber. Thereafter, the pressure in the flask was gradually reduced to 20 kPa at the same temperature, and xylene, unreacted phosphorus oxychloride, 2,6-dimethylphenol, and hydrogen chloride as a by-product were removed to obtain 1700 g of a reaction product mainly composed of di-2,6-xylyl phosphorochloridate (DXPC: structural formula below). The chlorine content of the reaction mixture was 10.9% by mass.

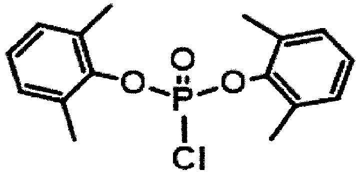

### (Example 1) Synthesis of phosphorus-containing polycyclic aromatic hydroxy compound (compound A)

A 500 mL four-neck flask equipped with a stirrer, thermometer, and hydrochloric acid collection apparatus (condenser connected to a water scrubber) was filled with 260 g of mesitylene, 90.0 g (0.4 mol) of a naphthol aralkyl resin SN-485 (structural formula below), 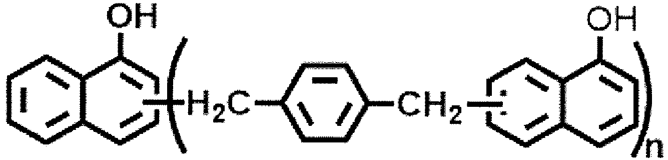 64.8 g (0.2 mol) of DXPC synthesized in Synthesis Example 1, and 0.95 g (0.01 mol) of anhydrous magnesium chloride and 2.0 g (0.015 mol) of anhydrous aluminum chloride as catalysts. The resulting mixed solution was heated and raised to a temperature of 154°C over 2 hours while stirring to collect hydrogen chloride generated. After continuing the reaction for another 25 hours, approximately 200 g of mesitylene was recovered under reduced pressure and the pressure was then returned to normal pressure. The reaction mixture was cooled to 60°C, having 200 g of ethyl acetate added thereto, washed with an acid, neutralized, and then washed twice with water and the solvent was removed, yielding 125.6 g of a phosphorus-containing naphthol resin (compound A) as a reaction product.

The phosphorus content of the resulting compound A was 3.6% by mass, and the hydroxyl equivalent was 514 g/eq. It is to be noted that the conversion rate of hydroxyl groups to functional groups containing phosphorus, calculated from the hydroxyl equivalent, was 37.6 mol%.

### (Comparative Example 1) Synthesis of phosphorus-containing phenolic compound B

A 500 mL four-neck flask equipped with a stirrer, thermometer, and hydrochloric acid collection apparatus (condenser connected to a water scrubber) was filled with 260 g of mesitylene, 58.0 g (0.5 mol) of a phenol novolac resin SP-2060N (structural formula below), 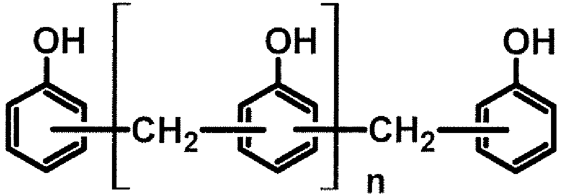 81.8 g (0.25 mol) of DXPC synthesized in Synthesis Example 1, and 1.2 g (0.01 mol) of anhydrous magnesium chloride and 2.0 g (0.015 mol) of anhydrous aluminum chloride as catalysts. The resulting mixed solution was heated and raised to a temperature of 154°C over 2 hours while stirring to collect hydrogen chloride generated. After continuing the reaction for another 25 hours, approximately 200 g of mesitylene was recovered under reduced pressure and the pressure was returned to normal pressure. The reaction mixture was cooled to 60°C, having 200 g of ethyl acetate added thereto, washed with an acid, neutralized, and then washed twice with water and the solvent was removed, yielding 113.5 g of a phosphorus-containing phenolic compound (compound B).

The phosphorus content of the resulting compound B was 5.5% by mass, and the hydroxyl equivalent was 360 g/eq. It is to be noted that the conversion rate of hydroxyl groups to functional groups containing phosphorus, calculated from the hydroxyl equivalent, was 38.9 mol%.

### (Comparative Example 2) Synthesis of phosphorus-containing phenolic compound C

With reference to the synthesis example in JP2002-97260A, 97 g of a phenol aralkyl resin MEH-7800 (structural formula below), 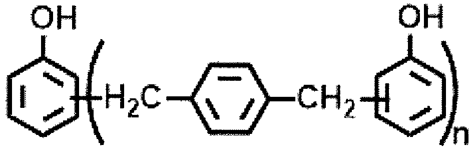 81.8 g (0.25 mol) of DXPC synthesized in Synthesis Example 1, and 1.2 g (0.01 mol) of anhydrous magnesium chloride and 2.0 g (0.015 mol) of anhydrous aluminum chloride as catalysts were filled in. Subsequently, the same operations as in Example 1 were performed to obtain 119.4 g of phosphorus-containing phenolic compound (compound C).

The phosphorus content of the obtained compound C was 4.1% by mass, and the hydroxyl equivalent was 460 g/eq. It is to be noted that the conversion rate of hydroxyl groups to functional groups containing phosphorus, calculated from the hydroxyl equivalent, was 38.0 mol%.

### (Comparative Example 3) Synthesis of phosphorus-containing phenolic compound D

With reference to the synthesis example in JP2002-97260A, 110 g of a biphenyl aralkyl resin MEH-7851M (structural formula below), 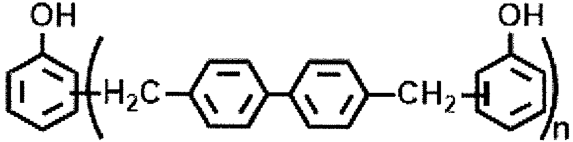 81.8 g (0.25 mol) of DXPC synthesized in Synthesis Example 1, and 1.2 g (0.01 mol) of anhydrous magnesium chloride and 2.0 g (0.015 mol) of anhydrous aluminum chloride as catalysts were filled in. Subsequently, the same operations as in Example 1 were performed to obtain 119.4 g of phosphorus-containing phenolic compound (compound D).

The phosphorus content of the obtained compound D was 4.1% by mass, and the hydroxyl equivalent was 511 g/eq. It is to be noted that the conversion rate of hydroxyl groups to functional groups containing phosphorus, calculated from the hydroxyl equivalent, was 39.1 mol%.

### (Comparative Example 4) Synthesis of phosphorus-containing phenolic compound E

The compound was synthesized according to the method described in WO2021/256351. Specifically, a 2L four-neck flask equipped with a stirrer, thermometer, and hydrochloric acid collection apparatus (condenser connected to a water scrubber) was filled with 1500 g of phosphorus oxychloride, 611 g of 2,6-dimethylphenol, and 1.2 g of magnesium chloride as a catalyst.

The resulting mixed solution was gradually heated and raised to a temperature of 110°C over approximately 3 hours while stirring followed by a reaction of the mixture, and the hydrogen chloride generated (a hydrochloric acid gas) was collected with a water scrubber. The pressure in the flask was then gradually reduced to 12 kPa at 120°C, and unreacted phosphorus oxychloride and phenol, as well as hydrogen chloride as a by-product, were removed to obtain 1200 g of mono-2,6-dimethylphenyl phosphorodichloridate.

A 2L four-neck flask equipped with a stirrer, thermometer, dropping funnel, and condenser was filled with 320 g of 2,3,5-trimethylhydroquinone, 135 g of pyridine as a hydrogen chloride scavenger, and 200 g of toluene as a solvent. The dropping funnel was also filled with 203 g of the above-described mono-2,6-dimethylphenyl phosphorodichloridate.

The mixed solution in the four-neck flask was heated to a temperature of 20°C while stirring, and the mono-2,6-dimethylphenyl phosphorodichloridate in the dropping funnel was dropped over 2 hours while maintaining the same temperature (20°C). After completion of dropping, the mixture was heated to 65°C and stirred for 5 hours to obtain a reaction product. The reaction product obtained was washed with dilute hydrochloric acid and water, heated to a temperature of 150°C, followed by reduction of pressure to 2 kPa to distill off water, toluene, and low boiling fractions, and it was cooled to room temperature to obtain 330 g of a phosphorus-containing phenolic compound (compound E, structural formula below) as a black-brown solid.

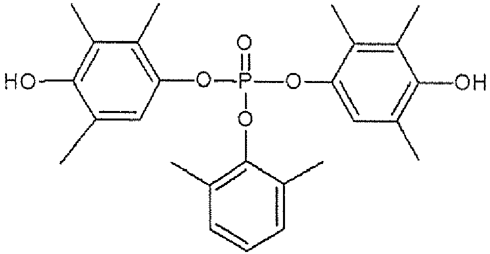

### Examples 2 and 3 and Comparative Examples 5 to 17 <Preparation of epoxy resin composition and evaluation of physical properties>

A varnish was prepared by blending the various components in the ratios shown in Tables 1 and 2, and a PET film was coated therewith and dried in an oven at 130°C for 5 minutes to produce a film of the resin composition. This film was then pulverized to obtain powder of the resin composition. Furthermore, this powder was then sandwiched between stainless steel mirror plates together with a spacer, molded in a vacuum oven at 190°C for 90 minutes, and cured at 200°C for 5 hours to obtain a sample of the cured product.

The following compounds were used in Examples and Comparative Examples of the resin composition.
ESN-475V: A naphthalene epoxy resin (epoxy equivalent: 325 g/eq) manufactured by NIPPON STEEL Chemical & Material Co., Ltd.
SN-485: A naphthol resin (hydroxyl equivalent: 210 g/eq) manufactured by NIPPON STEEL Chemical & Material Co., Ltd.
TPP: Triphenyl phosphate (phosphorus content 9.5% by mass) manufactured by DAIHACHI CHEMICAL INDUSTRY CO., LTD.
PX-200: An aromatic condensed phosphate ester (phosphorus content 9.02%) manufactured by DAIHACHI CHEMICAL INDUSTRY CO., LTD.
LC-950PM60: DOPO-BPA (hydroxyl equivalent 570.52 g/eq, phosphorus content 10.9% by mass, and solid content concentration 60%), manufactured by Shin-A T&C.
2E4MZ: 2-Ethyl-4-methylimidazole manufactured by Shikoku Kasei Co., Ltd.

The compounding formulations and results are shown in Tables 1 and 2.

**[Table 1]**

| | Example 2 | Example 3 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|
| ESN-475V | 45 | 40 | 61 | 54 | 51 | 49 | 45 | 47 | 42 |
| SN-485 | 12 | 3 | 39 | 19 | 12 | 15 | 7 | 15 | 6 |
| Compound A | 43 | 57 | | | | | | | |
| Compound B | | | | 27 | 36 | | | | |
| Compound C | | | | | | 36 | 48 | | |
| Compound D | | | | | | | | 39 | 51 |
| Compound E | | | | | | | | | |
| PX-200 | | | | | | | | | |
| LC-950PM60 | | | | | | | | | |
| 2E4MZ | 0.20 | 0.20 | 0.20 | 0.20 | 0.20 | 0.20 | 0.20 | 0.20 | 0.20 |
| Phosphorous content (% by mass) | 1.50 | 2.00 | 0.00 | 1.50 | 2.00 | 1.50 | 2.00 | 1.50 | 2.00 |
| Glass transition temperature (°C) | 148 | 152 | 139 | 162 | 168 | 156 | 152 | 150 | 147 |
| Dielectric constant | 2.75 | 2.70 | 3.09 | 2.87 | 2.80 | 2.89 | 2.95 | 2.93 | 2.98 |
| Dielectric loss tangent | 0.0039 | 0.0035 | 0.0082 | 0.0060 | 0.0053 | 0.0057 | 0.0055 | 0.0051 | 0.0050 |
| Water absorption rate(%) | 0.38 | 0.35 | 0.50 | 0.50 | 0.46 | 0.47 | 0.45 | 0.45 | 0.46 |
| Rate of change in dielectric constant after water absorption(%) | 0.5 | 0.5 | 1.0 | 0.7 | 0.9 | 0.6 | 0.5 | 0.5 | 0.5 |
| Rate of change in dielectric loss tangent after water absorption(%) | 24.0 | 26.0 | 21.4 | 32.0 | 35.0 | 30.0 | 34.0 | 28.0 | 29.0 |
| Flame retardancy | V-1 | V-0 | N.C | V-1 | V-0 | V-1 | V-1 | V-1 | V-0 |

**[Table 2]**

| | Comparative Example 12 | Comparative Example 13 | Comparative Example 14 | Comparative Example 15 | Comparative Example 16 | Comparative Example 17 |
|---|---|---|---|---|---|---|
| ESN-475V | 57 | 56 | 51 | 45 | 57 | 55 |
| SN-485 | 19 | 13 | 33 | 29 | 27 | 21 |
| Compound A | | | | | | |
| Compound B | | | | | | |
| Compound C | | | | | | |
| Compound D | | | | | | |
| Compound E | 23 | 31 | | | | |
| PX-200 | | | 17 | 25 | | |
| LC-950PM60 | | | | | 16 | 25 |
| 2E4MZ | 0.20 | 0.20 | 0.20 | 0.20 | 0.20 | 0.20 |
| Phosphorous content (% by mass) | 1.50 | 2.00 | 1.50 | 2.00 | 1.50 | 2.00 |
| Glass transition temperature (°C) | 122 | 117 | 99 | 94 | 144 | 149 |
| Dielectric constant | 2.98 | 2.87 | 2.81 | 2.66 | 2.99 | 2.89 |
| Dielectric loss tangent | 0.0060 | 0.0050 | 0.0057 | 0.0064 | 0.0066 | 0.0059 |
| Water absorption rate(%) | 0.54 | 0.60 | 0.52 | 0.63 | 0.60 | 0.70 |
| Rate of change in dielectric constant after water absorption(%) | 0.6 | 0.7 | 0.7 | 0.9 | 4.1 | 4.8 |
| Rate of change in dielectric loss tangent after water absorption(%) | 23.4 | 25.7 | 28.7 | 34.8 | 40.1 | 47.0 |
| Flame retardancy | V-1 | V-0 | V-1 | V-0 | V-1 | V-0 |

### Industrial Applicability

The phosphorus-containing polycyclic aromatic hydroxy compound of the present invention is useful for flame retardation of a plastic material, the thermoplastic resin such as an epoxy resin, for use in electric and electronic products, office automation equipment, communication equipment, building materials, and the like, and is particularly useful as a flame retardant material for reducing a transmission loss at higher frequencies accompanying an increase in the amount of information processed of electronic devices.

## Claims

1. A phosphorus-containing polycyclic aromatic hydroxy compound represented by general formula (1), 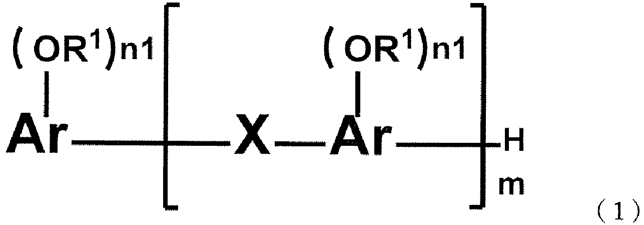 wherein, in general formula (1), m is an integer of 1 to 20; n1 is each independently an integer of 1 to 4; and Ar is each independently an aromatic ring having 6 to 30 carbon atoms (excluding a benzene ring) optionally having a substituent, R1 is each independently hydrogen, a linear or branched alkyl group having 1 to 5 carbon atoms, or a substituent represented by general formula (2), provided that at least one R1 comprises a structure of the general formula (2), X represents a linking group and is each independently oxygen, sulfur, a substituted or unsubstituted cycloalkylene having 3 to 20 carbon atoms; or a substituted or unsubstituted aralkylene having 8 to 32 carbon atoms, and 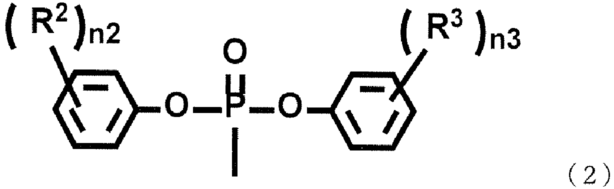 wherein, in general formula (2), R2 and R3 are each independently a linear or branched alkyl group having 1 to 5 carbon atoms, and n2 and n3 are each independently an integer of 0 to 5.

2. The phosphorus-containing polycyclic aromatic hydroxy compound according to claim 1 represented by the following general formula (3), 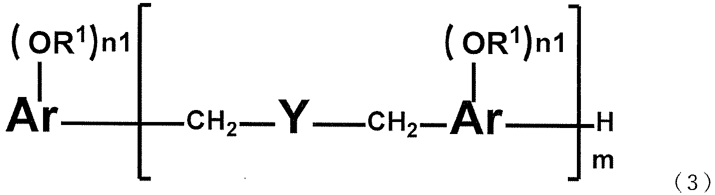 wherein, in general formula (3), R1, n1, and m are the same as in the general formula (1), Y is an aromatic cyclic group having 6 to 30 carbon atoms optionally having a substituent, Ar represents a polycyclic aromatic group derived from a polycyclic aromatic compound represented by the following general formula (4), (5), or (6), and 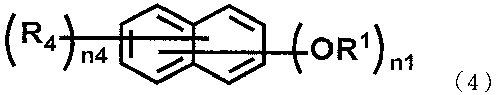 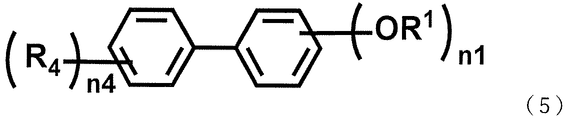 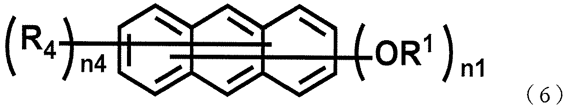 wherein, in general formula (4), (5), and (6), R4 is each independently an alkyl group having 1 to 10 carbon atoms, an alkoxy group having 1 to 10 carbon atoms, and n4 is an integer of 0 to 4, and R1 and n1 are the same as in the general formula (1).

3. The phosphorus-containing polycyclic aromatic hydroxy compound according to claim 1, having a hydroxyl equivalent of 100 to 3000 g/eq and a phosphorus content of 1.5 to 15.0% by mass.

4. A method for producing the phosphorus-containing polycyclic aromatic hydroxy compound according to any one of claims 1 to 3, comprising reacting 0.1 to 0.9 mol of a phosphorus compound represented by general formula (8) with per mole of a hydroxyl group of a polycyclic aromatic hydroxy compound represented by general formula (7), 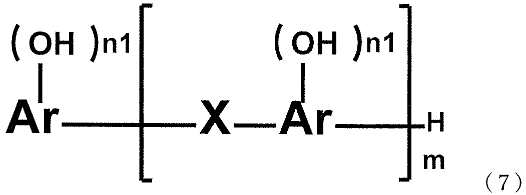 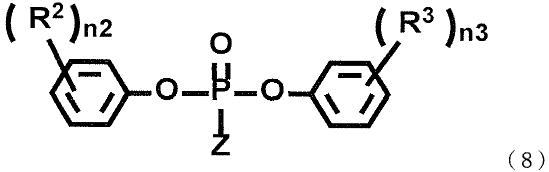 wherein, in general formula (7) and (8), m, n1, Ar, X, R2, R3, n2, and n3 are the same as in the general formulae (1) and (2), and Z represents a halogen atom.

5. A curable resin composition comprising the phosphorus-containing polycyclic aromatic hydroxy compound according to any one of claims 1 to 3 and a curable resin.

6. A cured product obtained by curing the curable resin composition according to claim 5.
